# EUROPEAN PATENT SPECIFICATION

(11) **EP 4 540 750 B1**
(45) Date of publication and mention of the grant of the patent: **07.10.2026**
(21) Application number: 22740544.6
(22) Date of filing: 31.05.2022
(51) Int. Cl.: G06F 21/62, G06V 10/82, G06V 40/16, G06V 10/44, G06V 10/26

(54) **SYSTEM AND METHOD FOR LOSSLESS SYNTHETIC ANONYMIZATION OF THE VISUAL DATA**
SYSTEM UND VERFAHREN ZUR VERLUSTFREIEN SYNTHETISCHEN ANONYMISIERUNG DER VISUELLEN DATEN
SYSTÈME ET PROCÉDÉ D'ANONYMISATION SYNTHÉTIQUE SANS PERTE DES DONNÉES VISUELLES

(43) Date of publication of application: 23.04.2025
(73) Proprietor: Syntonym Limited, London W12 7RZ (GB)
(72) Inventor: OZCAN, Batuhan, Bornova/Izmir (TR); PEKTAS, Muhammed, Bornova/Izmir (TR); YURDAKUL, Cengizhan, Bornova/Izmir (TR); PISKIN, Nuh Muhammed, Bornova/Izmir (TR); YILMAZ, Yasin, Bornova/Izmir (TR)
(74) Representative: Atalay, Baris
(86) International application number: PCT/TR2022/050505
(87) International publication number: WO 2023/234882

(56) References cited:
- EP-A1- 3 451 209
- NIKHIL CHHABRA: "Generative Adversarial Networks for Image Anonymization", MASTER THESIS, 17 October 2019 (2019-10-17), pages 1 - 60, XP055681759
- PEIHAO ZHU ET AL: "Barbershop: GAN-based Image Compositing using Segmentation Masks", ARXIV.ORG, CORNELL UNIVERSITY LIBRARY, 201 OLIN LIBRARY CORNELL UNIVERSITY ITHACA, NY 14853, 16 October 2021 (2021-10-16), XP091068971

## Description

### TECHNICAL FIELD

In general, the present invention relates to the field of computer vision. More specifically, the subject matter of this patent application relates to the visual data anonymization. In particular, the present invention relates to face image manipulation by algorithmic and perceptual data anonymization through face detection, alignment, optimization, reverse alignment and blending steps.

### PRIOR ART

According to official institutions around the globe, human face images are considered sensitive biometric information and classified as special category of personal data; meaning they are subject to a stricter protection regime under privacy regulations. Consequently, data controllers and/or handlers are subject to enhanced data protection compliance requirements with regards to the collection, lawful processing, transfer, and storage of sensitive biometric information as well as specific technical and organizational security measures. Companies are not allowed to process the collected data containing faces without the consent of each and every person. Also, there are plenty of monitoring devices in modern life surroundings is evident. For example, autonomous cars take video recordings of the surroundings. These images would inevitably include people's faces and may thus include sensitive biometric information, which may not follow modern government rules and policies. On the other hand, large scale adoption of many technologies relies heavily upon high-utility visual data to be used in Al/ML trainings. When visual data is not processed in a way that meets individuals' privacy expectations and ensures compliance with data protection regulations; this not only leaves stakeholders at risk of non-compliance but also damages the reliability of Al algorithms. To further illustrate, for autonomous mobility technologies to be commercially available, automakers must ensure that Al algorithms can simulate the human driving experience and even extend human driving capabilities. To confidently rely on Al to make the most accurate decisions in complex driving situations, technology developers must create the most accurate learning environment. Therefore, it is neither possible to improve the Al, nor profitable for data-oriented organizations to develop accurate and reliable Al algorithms without collecting and processing data, especially the visual ones from cameras which are arguably the most important ones. To comply with ever-evolving privacy regulations technology developers are required to use anonymization techniques that are traditionally envisaged for the structured data domain. Therefore, these techniques cause both structural and functional losses in the unstructured visual data domain, leading to a dilemma between protecting privacy and maintaining utility. This problem can only be solved by approaching visual data anonymization from the perspective of privacy-preserving AI. Privacy and innovation are both essential, anonymization decides where the optimal balance point sits for both.

The problem of face anonymization refers generally to alteration of visual data (i.e., collection of images or video streams) such that any visible facial biometrics become unrecognizable by human perception as well as face recognition algorithms. Traditionally, this problem has been addressed by primitive image processing solutions that corrupt the data to remove biometrics, such as image blurring. However, the corruption caused by these methods is making it impractical to extract some important analytics (i.e., behaviour, demographics, etc.). In the light of recently emerged artificial intelligence and machine learning advancements, the present invention proposes a face anonymization technology that is based on synthesizing images of novel identities while preserving the original attributes such as expression, pose, lighting, age, gender and then blending it into the original scene seamlessly. In other words, the present invention anonymizes visual data to be suited to the rules of official institutions.

Thanks to Generative Adversarial Networks (GAN), generation of realistic face has been active research area. Current state-of-the art models are able to generate faces that have high resolution and realism by diverse, clean and high resolution dataset and progressively training of large convolutional neural networks. Despite achieved high quality successful results, traditional methods do not control metrics such as (pose, age, gender etc.) about original face information. Consequently, their usability in anonymization applications is limited. Thus, there are some challenges about controllable face generation process. Until recently, anonymization provided by traditional methods such as blurring, pixelization or masking face area on visual data. Traditional methods are safe in terms of anonymization but they loss any other metrics of the original face such as (age, gender, expressing etc.). As an alternative method is obfuscation and impersonation attack on face area of image. But these methods can be deceived by some filtering operations. Newest approach is generating non-existent face and replacing with original ones.

The state of the art document US2021241097A1 mentions a training method and device for an object recognition model. An apparatus for optimizing a neural network model for object recognition, including a loss determination unit configured to determine loss data for features extracted from a training image set using the neural network model and a loss function with a weight function, and an updating unit configured to perform an updating operation on parameters of the neural network model based on the loss data and an updating function, wherein the updating function is derived based on the loss function with the weight function of the neural network model, and the weight function and the loss function change monotonically in a specific value interval in the same direction.

The document US2020320341A1 which is another state of the art teaching, discloses tools and methods for creating synthetic images with photo-realistic images. The disclosed face generation technology focuses on photo-realistic results by leveraging analysis of a pool of pre-selected images based on a user selection and preferences. The tools and methods as described herein include limiting the pool of pre-selected images by one or more criteria, including, for example, but not limited to gender, age, skin colour, expression, etc. The pre-selection of a more curated pool of images allows a user to include a desired set of criteria and specifications that the user would want in a generated synthetic image or images.

The teaching of the document EP3451209A1 discloses an apparatus comprising at least one processor, and at least one memory including computer program code, wherein the at least one memory and the computer program code are configured, with the at least one processor, to: train, using a set of training images a generative model network and a discriminator model network to generate a generic image for anonymizing an input image whilst maintaining unprocessed a condition and/or feature; and infer from the input image using the generative model network an output anonymized image.

The present invention approaches anonymization as a face manipulation task by relying on a face generator GAN as prior and optimizing a combination of a set of objective functions. Since the goal is to preserve all other facial attributes such as expression, illumination, background, age, gender etc. other than identity, the present invention reconstructs the input image by projecting it to the GAN latent space based on the combination of objective functions. This process is implemented as a gradient descent optimization where the latent parameters of the GAN is updated over some iterations to satisfy objective functions. Objective functions are formulated to preserve all sorts of facial attributes, named above, other than identity of which is encouraged to be changed to a given target identity.

In addition to satisfying algorithmic anonymization, the present invention ensures high perceptual anonymization. Various loss functions are used such as render loss, geometric structure loss etc. to achieve high perceptual anonymization performance. To obtain best performance through optimization process, there are many minor improvements during the optimization in order to polish the resulting anonymized image such as occlusion masking, gaze preservation, smooth blending etc.

The present invention provides higher anonymization performance when it is compared to state of the art while preserving other facial metrics. The present invention generates high quality (in an embodiment, up to 1024x1024) face images while preserving original face information. Face metrics are controlled through generation process by iterative latent optimization technique. In addition, thanks to high quality face anonymization, first high quality facial anonymization dataset is created. Using this dataset, the present invention is modelled with supervised deep neural networks.

Finally, the present invention proposes a pipeline to benefit for real-world scenarios in real-time. Large dataset of anonymized faces is generated, and an image to- image translation network is trained in a supervised fashion. For smooth integration to real-world scenes, it is equipped with face detection, alignment, reverse alignment and blending steps. Overall anonymization pipeline is designed to stably run real-time on end-user devices.

In brief, the present invention presents a facial anonymization approach that starts with a sophisticated optimization to generate training data which then is used to train an image-to-image translation deep neural network. Projection-based face anonymization based on a pretrained face generator network guided by a set of objective functions. Large dataset is synthesized by present invention for fully supervised training. Real-time image-to-image translation network is trained by this dataset. Identity loss is pushed to the projected identity towards target identity. Landmark loss is kept the pose or manipulated facial shape. Render loss brings more facial features from the target identity image. 3D reconstruction loss brings more face shape from the target image. Sophisticated masking is used for better blending. Some additional loss functions keep expression same as input image.

One of the aims of the invention is to provide realistic, high-quality and anonymized facial images.

Another aim of the invention is to preserve all other facial attributes such as expression, illumination, background, age, gender etc. other than identity of the people.

Another aim of the invention is to reconstruct the input image by projecting it to the GAN latent space based on the combination of objective functions.

Another aim of the invention is to ensure high perceptual anonymization.

Another aim of the invention is to integrate this technology to real-world scenes smoothly.

### BRIEF DESCRIPTION OF THE DRAWINGS

The figures whose descriptions are given below, aim to exemplify anonymized facial images with variety of parameters and high quality whose advantages with respect to the state of the art are already summarized above and will be discussed in detail hereinafter.

The figures should not be construed as limiting the scope of protection as defined in the claims and are not to be referenced solely in interpreting the scope of said claims without regarding the technique in the description.
Figure 1 shows general flowchart of end to end working principle of the present invention.
Figure 2 shows flowchart of pre-process step in the present invention.
Figure 3 is a matrix of generation of outputs through different inputs with same targets as an embodiment of the present invention.
Figure 4 is a flowchart of the optimization step according to an embodiment of the present invention.
Figure 5 is an example of hair generation according to an embodiment of the present invention.
Figure 6 is a flowchart of VGG loss according to an embodiment of the present invention.
Figure 7 is a flowchart of eye VGG loss according to an embodiment of the present invention.
Figure 8 is a flowchart of background loss according to an embodiment of the present invention.
Figure 9 is an example of mask creation for blending according to an embodiment of the present invention.
Figure 10 shows image to image translation using the database provided by present invention.

### DETAILED DESCRIPTION OF THE INVENTION

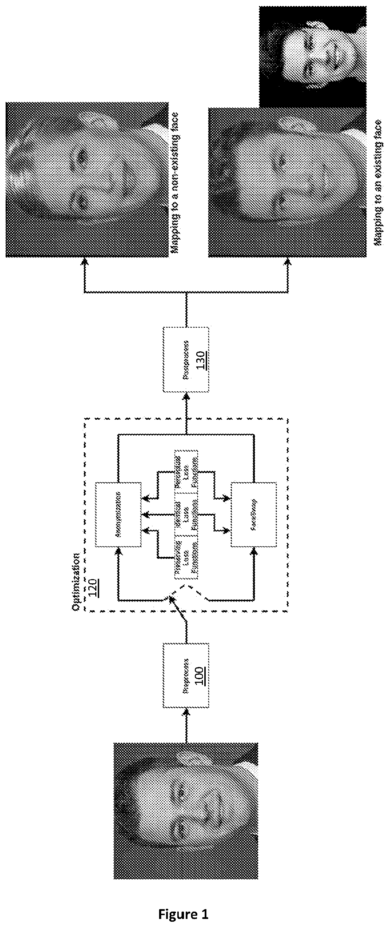

Generally, this invention relates to a method and apparatus having end-to-end working principle comprising 3 general steps as it is shown in Figure 1. Specifically, these steps may be utilized on sequentially pre-processing (100), optimization (120) and postprocessing (130).

In the pre-processing step (100), the information required for optimization is extracted and directed to the optimization process (120). Optimization (120) is done with this information, and it gives high quality, realistic and anonymized faces as output. Said faces are placed in the original image by postprocessing (130).

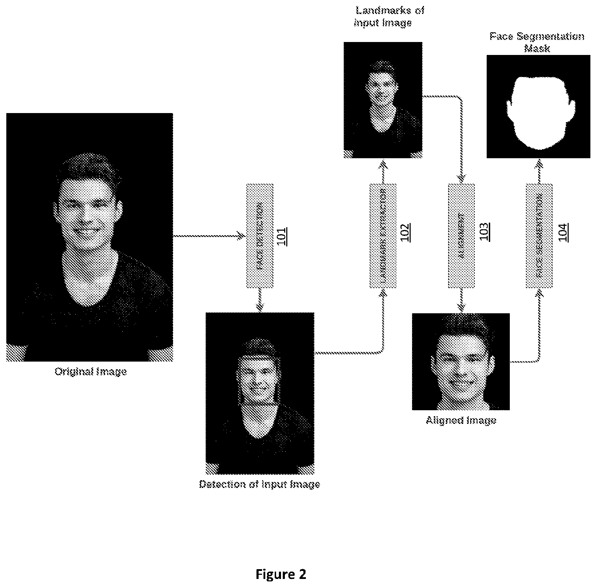

Figure 2 shows the pre-process (100) step comprising four processes. These processes are face detection (101), obtaining landmarks (102), alignment (103), and face segmentation mask extraction (104), respectively. According to an embodiment of the invention, preferably, obtaining 68 landmark points within a facial image generate the optimum quality aligned face image. First, the input image to be anonymized passes through the face detection network and in an embodiment, the position of the face is obtained. Then it goes through the network which will extract landmarks at this location. Alignment (103) is performed with the landmarks obtained and the face is placed on a predetermined template. The aligned face finally passes through the face mask segmentation network and the mask is obtained.

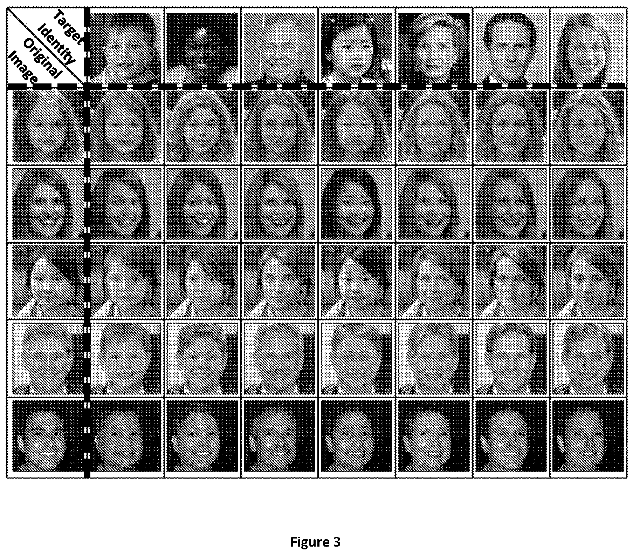

In the present invention, face detection algorithms are used to detect faces in the image to be anonymized. Returns the coordinates of the faces in the image as output. The detected faces are prepared to obtain landmarks. In an embodiment of the present invention, the face detection network which customized version of a known powerful face detection algorithm (RetinaFace) is used to determine where the anonymization process will be done in the image that given as input. The coordinates of the faces in the input picture are obtained as output. Figure 3 shows results for different inputs with same targets.

Said face landmark detection is a computer vision task where key points from face are detected and tracked. According to an embodiment of the invention, the known Face Alignment repository can be used to obtain the landmarks. A successful landmark extractor (102) is required for the optimization to yield successful outputs and to avoid mistakes while reverse aligning the generated face.

Within a facial image, the task of accurately localizing the set of landmark points that define the shape of the face is called alignment (103). Alignment (103) standardizes inputs, making it easier for neural network to converge. Generative network will be used during the optimization, the alignment process (103) was done according to the template used while training these networks.

Face segmentation (104) is the process of finding and determining the area covering the inside of the face, excluding areas such as hair, neck, and beard on the human head. The mask is used because it contains the information about which regions on the face given as input will be changed during optimization.

The present invention gathers target identity feature to anonymize visual data. Target identity feature represents that will be replaced identity into original image. Unless the target identity and the input identity are the same, anonymization can be completed fully. By default, the pool of target identity features is comprising of images of non-existing faces. Said pool can also be curated by the present invention or the user. If curated, said pool can be comprising of non-existing and/or existing faces. Also, during curation said pool can be narrowed down to the specific metrics (pose, age, gender etc.).

Mixing target identity features and input image features performed by the following equation. Coefficient takes between -1 and 1 values. ${Id}_{desired} = {Id}_{input} ∗ {λ}_{coef} + {Id}_{target} ∗ \left(1-\left‖{λ}_{coef}\right‖\right)$

In the present invention, deep neural network cannot control properties of image but aims to just generate realistic portrait images. Thanks to this deep neural network, target database is created. Identity feature of images is extracted through state-of-the-art identity extraction models in this dataset. While selecting the target, identity that does not exist in real and the input identity are mixed. In an embodiment, this mix can be adjusted with a pre-determined coefficient and a synthetic face is obtained. This structure enables to use it as a meiosis division, not giving the same output due to the mixture with the input, even if the same target is given.

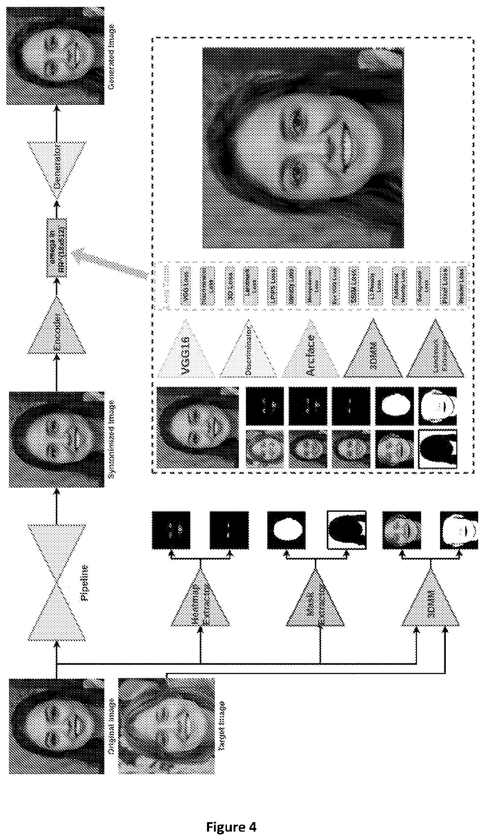

Figure 4 shows flowchart for optimization. An optimization setting has been set up for each image, in which relevant metrics (age, gender, expression, etc.) are preserved with the least loss, while algorithmic and perceptual anonymity is ensured at the highest level. In this structure, higher resolution and more realistic faces were obtained.

The optimization is done by projecting to the latent space of pretrained generator network that is trained by GAN based methods on a high resolution synthetic face dataset. Each point in this latent space corresponds to a human face in the image domain, therefore; instead of generating a face from a latent vector, here the generator is reversed to project an input face image into the latent space. This projection, or inversing (also known as gain inversion in literature) has been done by a backpropagation algorithm with stochastic gradient descent optimization, given a set of objective functions. The objective functions, which are prepared to provide the right conditions at each input, manipulate the corresponding latent vector to satisfy the objectives. The output of this optimization is the generated face of the final vector.

During optimization, latent parameters are optimized to obtain best latent vector that corresponds to anonymized face image. In summary, the overall optimization objective can be formulated as following equation. $\begin{matrix}{min}_{w} ε \left(w\right) = {λ}_{vgg} ∗ {L}_{vgg} + {λ}_{pixel} ∗ {L}_{pixel} + {λ}_{SSIM} ∗ {L}_{SSIM} \\ + {λ}_{LPIPS} ∗ {L}_{LPIPS} + {λ}_{background} ∗ {L}_{background} + {λ}_{landmark} ∗ {L}_{landmark} \\ + {λ}_{eye} ∗ {L}_{eye} + {λ}_{L 1 penalty} ∗ {L}_{L 1 penalty} + {λ}_{discriminator} ∗ {L}_{discriminator} \\ + {λ}_{identity} ∗ {L}_{identity} + {λ}_{additionalidentity} ∗ {L}_{aditionalidentity} + {λ}_{render} ∗ {L}_{render} \\ + {λ}_{geometricstructure} ∗ {L}_{geometricstructure} + {λ}_{3 d} ∗ {L}_{3 d} + {λ}_{hair} ∗ {L}_{hair}\end{matrix}$

Unlike the loss functions generally used in generative models, there are losses that the optimization structure really raises awareness, landmark loss, geometric structure loss and identity loss. In an embodiment of the present invention landmark loss function is used by manipulating the points on the face and making changes to the points such as chin, nose, eyes, and mouth on the output face. Identity loss function is used to map the target face that does not actually exist, while fully preserving the required metrics (age, gender, expression, etc.) in the input. Geometric structure loss function is used to reinforce the change perceptually as well as algorithmically changing identity. The optimization process (120) is to give an anonymized output face by providing the desired conditions step by step for an input face. Loss functions determined accordingly were used to provide the desired conditions. In an embodiment of the invention, the optimization takes between 20-200 iterations in total.

GAN is a machine learning model in which two neural networks compete with each other to become more accurate in their tasks. GAN is a generative model that is trained using two neural network models. One model is called the "generator" or "generative network" model that learns to generate new plausible samples. Another model is called the "discriminator" or "discriminative network" and learns to differentiate generated examples from real examples.

Losses are mathematical functions used to converge outputs to desired formats by rewarding them when they are right and punishing them when they are wrong. In the optimization process (120), by using these functions, the outputs are both anonymized and expressed as expression, age, gender, etc. metrics are preserved.

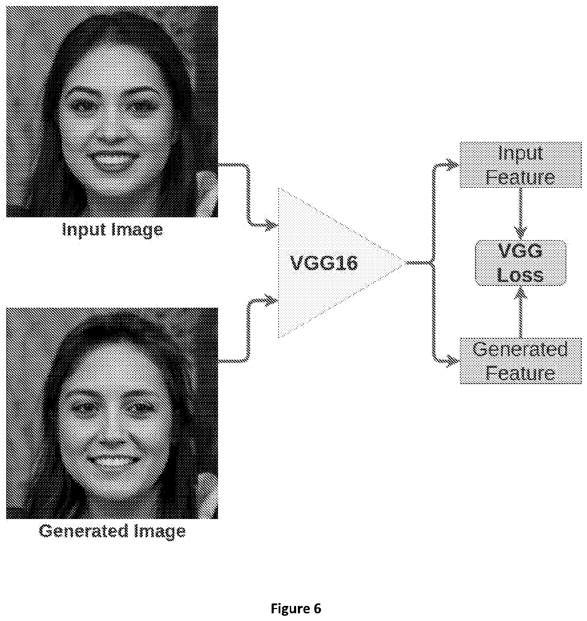

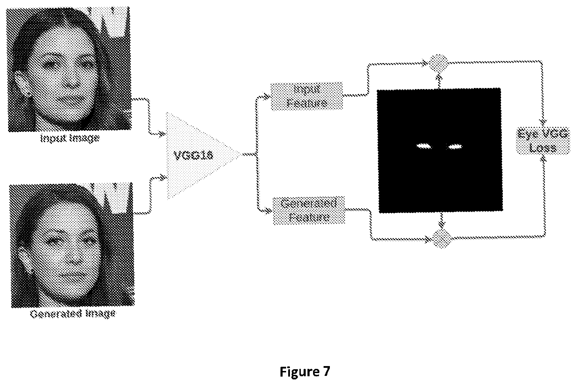

Figure 6 shows flowchart of VGG loss. VGG Loss is a type of content loss. It is an alternative to pixel-wise losses and VGG Loss attempts to be closer to perceptual similarity. As the distance is increased by moving away from the starting layers in VGG16, the information it contains about tiny details decreases. In an embodiment of the present invention, as a result of the tests made to preserve these details and transfer them to the generated face during the optimization, the 4th layer was chosen as the most reasonable layer. Outputs from layer 4 of VGG16 are used for optimization. The output from the 4th layer is a 128x128x128 vector containing the information of the image given as input. During optimization, this loss is calculated between the input image and the generated image. Figure 7 shows eye VGG loss workflow.

The pixel loss is essentially a measure of how far the input image's pixels are from the generated image's pixels. During optimization, this loss is calculated from the fields inside the face segmentation mask (104), between the input image and the generated image.

The structural similarity index measure (SSIM) is a method for predicting the perceived quality of digital television and cinematic pictures, as well as other kinds of digital images and videos. During optimization, this loss is calculated from the fields inside the face segmentation mask (104), between the anonymized image and the generated image.

Learned Perceptual Image Patch Similarity (LPIPS) metric evaluates the distance between image patches. Higher means further/more different. Lower means more similar. During optimization, this loss is calculated from the fields inside the face segmentation mask (104), between the input image and the generated image.

The dominant mouth position in the latent space is smileys, and the eyelid position is open. In an embodiment of the invention, when inappropriate inputs are given (with eyes closed, mouth in different ways, etc.), heatmaps of landmarks were used to control these situations in the output. During optimization, this loss is calculated between the input image eye and mouth points and the generated image eye and mouth points.

A mask is created using the eye points of landmarks obtained during the pre-process (100). In an embodiment of the invention, with this eye mask, 128x128x128 outputs from the previously mentioned VGG16 model are masked, and an extra loss is calculated only for the eye area. This loss was used to solve the problem of different viewing directions or eyes opened/closed, since most of the outputs in the latent space are eyes open and straight. During optimization, this loss is calculated from the fields inside the eye segmentation mask, between the input image and the generated image.

In an embodiment of the invention, L1 penalty loss tries to keep the outputs at a logical point by looking at the distance of the optimized 18x512 (extended latent space) information vector to the mean values of all points in the space. During optimization, this loss is calculated between the mean latent vector and the latent vector which is predicted in iteration.

The discriminator used during optimization is the same pretrained one. During training, discriminator loss is added to use the information that the discriminator learns while controlling the outputs of the generator during optimization.

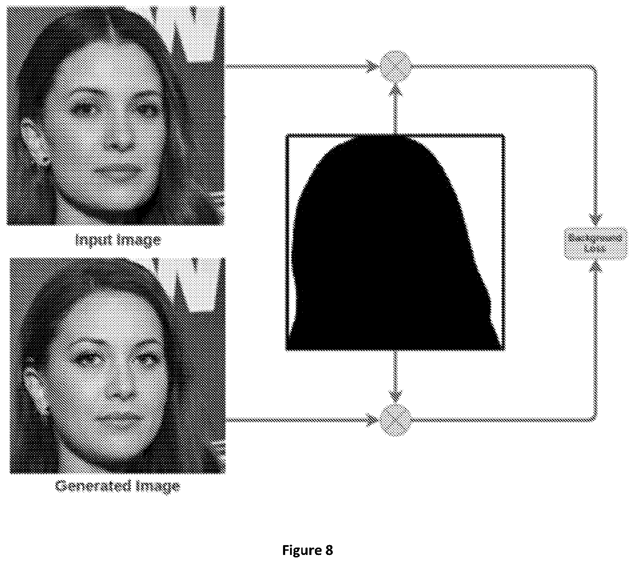

Figure 8 shows background loss flowchart. In an embodiment of the invention, BiSeNet was used to obtain the mask of the background. This loss was used to avoid incompatibility while blending the face generated as a result of optimization into the input image.

In an embodiment of the invention, ArcFace is used to get only identity information on faces. In order to make the face that is wanted to be produced anonymous, its identity is converged to the faces that do not actually exist. In an embodiment of the invention, this convergence is calculated from vectors with 1x512 identity information of ArcFace. During optimization, this loss is calculated between the target image identity vector and the generated image identity vector.

Identity Loss is implementing the generated face similar to a target. Additionally, identity loss is planned to differentiate the generated face from the input face. During optimization, this loss is calculated between the input image identity vector and the generated image identity vector.

In an embodiment of the invention, the target image is brought to the head pose of the input image using 3D face construction and rendered. A new mask is created so that any gaps left during rendering are not included in the loss. The reason for using this loss is to generate synthetic faces with an extra similarity to the target. During optimization, this loss is calculated from the fields inside the face render mask, between the target image which is reconstructed with new head pose and the generated image.

Geometric structure loss is used to simulate the chin and cheek parts with the target that is desired to converge, so that the generated face looks different perceptually. In an embodiment of the invention, the target image is reconstructed with the input image pose using 3D face construction. Then, landmarks of the reconstructed image are obtained. The distances between the landmarks of the reconstruction and the input image are calculated, and landmarks are shifted by these distances during optimization. Landmark points are used, which shifted to ground truth. During optimization, this loss is calculated between the shifted landmark heatmap and the generated image landmark heatmap.

In an embodiment of the invention, a new vector is obtained by taking the shape information from the target and all the remaining information from the input from the 1x257 vector obtained as output using 3DMM. This is used as ground truth. The same process is done for the generated face and loss is calculated from these two results.

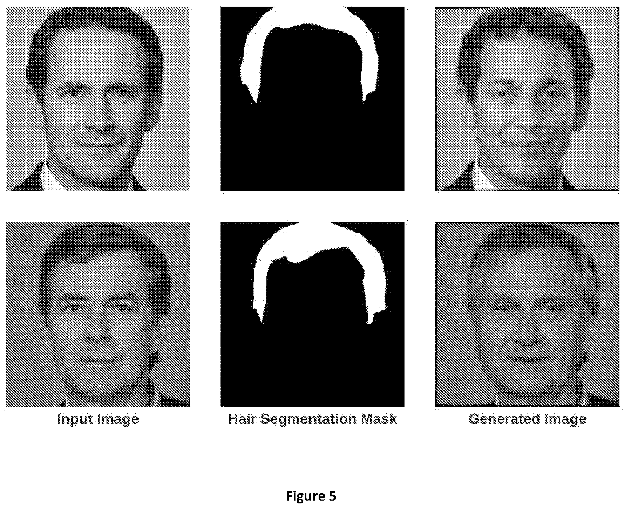

During the optimization, new hair is generated by manipulating the colour and pattern with the hair mask. Figure 5 show using the hair generation mask.

After generating a high quality and realistic face, said face needs to be placed back into the original image. In an embodiment, said landmark points provided in the alignment process are used to place it back. While putting the generated face in its place, a new mask is created to take only the modified parts and blending is done with this mask.

Alignment is the process of moving an image from one template to another without breaking its structure. Moving from one starting point to another is done using operations such as rotation, cropping, etc. When the points are certain, it is very simple to do the alignment between the two images without disturbing the structure. Therefore, the starting points are saved during the first alignment process. Then, while aligning the generated synthetic face, these recorded points are used with the reverse alignment process. These two operations allow to make lossless movements between images of different shapes.

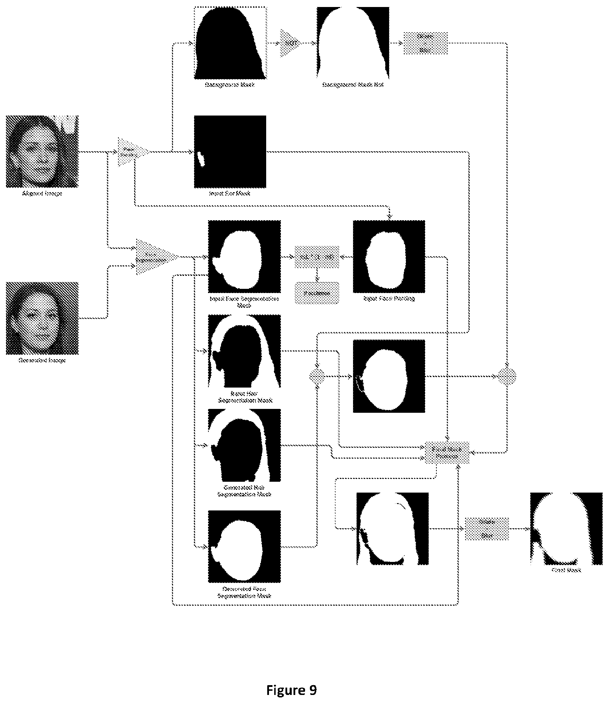

Figure 9 shows how to create mask for blending process. Blending is the process of placing the generated synthetic face instead of the original face in a way that does not distort its reality with various image processing methods. Here, a mask is created to determine the places that cover the change in accordance with each output, and blending is performed on this mask. The created mask is created to adapt to the change of the geometric structure and the change of the generated hair, and to receive the generated changes in an optimal way. For instance, the original face may have fine lines, the generated face may have thick lines, or the original face may have thick lines and the generated face fine lines and the original hair is short, the generated hair is long, the original hair is long, the generated hair is short or the structures of the original and generated hair may be different.

In an embodiment of the present invention, the system processes on real-time performance. Firstly, first facial anonymization dataset is created which represents anonymization characteristics of the invention by using all process. After that, an image-to-image translation network is trained to learn this anonymization characteristic on the created dataset. Finally, an image-to-image translation model is obtained that can anonymize face on real-time performance and high anonymization accuracy.

Images are sampled with other resources from a face dataset to create subset. This subset processed through all mentioned anonymization process. Consequently, high quality anonymized images are obtained. Resources of original and anonymized images are paired to create supervised facial anonymization dataset. This dataset prepared for anonymized faces while preserving all other metrics (age, gender, expression etc.)

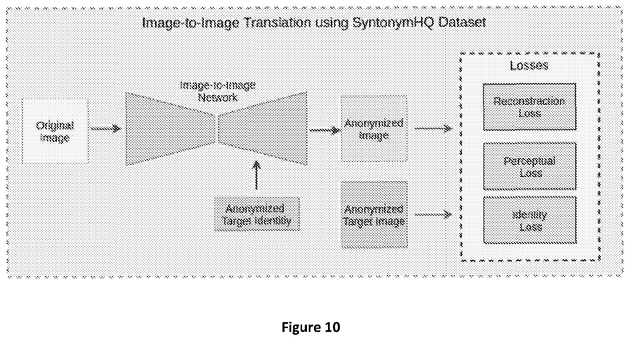

Figure 10 shows that supervised high quality facial anonymization dataset enables modelling the process in deep neural networks. Also, different facial anonymization models that have different resolution and size can be trained.

Present invention proposes high quality (for example, 1024x1024) anonymization method that can preserve all other metrics and also thanks to output of proposed method, more efficient and quality models are trained.

The present invention is applicable to image recording devices, cameras, apparatus, edge devices capturing visual streaming data, end-user devices, computer programs, cloud and computer storage media suitable for integration and configuration of such methods for analysing and modifying images as well as visual streaming data in order to perform anonymization tasks.

When integrated with an edge device with image recording capabilities, the present invention enables fast and stable run on the edge as an application service to provide privacy-compliant lossless visual data, in real-time or in non-real-time.

When integrated with a platform capturing visual streaming data through an on-premise or cloud based server architecture, the present invention also ensures fast and stable run on the on-premise or cloud based server as an application service to provide privacy-compliant lossless visual data, in real-time or non-real-time.

When integrated with an end-user device with image recording capabilities, the present invention ensures fast and stable run on the CPU & GPU architectures to provide privacy-compliant lossless visual data, in real-time or non-real-time.

When integrated with internal vehicle cameras, the present invention enables the collection and processing of privacy-compliant in-cabin intelligence by providing real-time insights as to the awareness, engagement, responsiveness, and availability of the persons inside the vehicle through in-cabin camera analytics. Through integrations with the vehicle's safety assurance systems (on-the-edge/in-vehicle, over the cloud or 5G network infrastructures), the present invention ensures fast and accurate detection of the state of the driver (awake, intoxicated etc.) to achieve increased safety, even in the most complex driving situations where the individual's explicit consent for in-cabin monitoring cannot be obtained.

When integrated with external vehicle cameras, the present invention enables the collection and processing of privacy-compliant road safety intelligence by providing real-time insights as to the awareness and intentions of persons on the road (i.e., pedestrians, cyclists) through external camera analytics. Under GDPR (or other privacy regulations having a similar compliance framework) data processing activities that involve the systematic monitoring of a publicly accessible place are considered as "high-risk activities"; meaning these are "likely to result in a high risk to the rights and freedoms of natural persons". Therefore, the present invention creates privacy-compliant video processing potential for all business and AI/ML developers.

When integrated with city cameras, traffic cameras, public transport vehicle cameras, as well as open data platforms that capture and consolidate visual streaming data, the present invention enables the collection and processing of privacy-compliant high quality visual datasets by providing real-time insights for the sustainable development of smart transport and smart city technologies. The present invention enables sharing data and technology to support sustainable development goal.

When integrated with edge devices capturing visual streaming data deployed on smart screens, the present invention enables direct, by providing privacy-compliant real-time insights based on audience demographics. Therefore, the present invention provides a dataset through integrations with rideshare, taxi/cab, public transport, and people mover smart screens.

When integrated with cameras and/or computer software capturing and consolidating visual streaming data located in physical stores (i.e., retail stores, in-store ads, windows, displays etc.), the present invention enables measuring consumer engagement and enhancing in-store experience by providing privacy-compliant real-time insights based on consumer demographics.

In an embodiment of the present invention, a method of anonymizing a face in a set of images by at least one processor comprises detecting the face from set of images through face detection applications.

In another embodiment of the present invention, a method of anonymizing a face in a set of images by at least one processor comprises obtaining the position of the face.

In another embodiment of the present invention, a method of anonymizing a face in a set of images by at least one processor comprises obtaining at least 3 landmarks.

In another embodiment of the present invention, a method of anonymizing a face in a set of images by at least one processor comprises placing the face on a predetermined template.

In another embodiment of the present invention, a method of anonymizing a face in a set of images by at least one processor comprises obtaining a mask comprising areas other than hair, neck, and beard through a face mask segmentation network.

In another embodiment of the present invention, a method of anonymizing a face in a set of images by at least one processor comprises determining target identity features to replace the identity features in the original image.

In another embodiment of the present invention, a method of anonymizing a face in a set of images by at least one processor comprises generating a synthetic face by mixing target identity features and input image features.

In another embodiment of the present invention, a method of anonymizing a face in a set of images by at least one processor comprises optimizing relevant metrics preserved with the least loss.

In another embodiment of the present invention, a method of anonymizing a face in a set of images by at least one processor comprises projecting to the latent space of pretrained generator network trained by GAN on a high resolution synthetic face dataset.

In another embodiment of the present invention, a method of anonymizing a face in a set of images by at least one processor comprises inversing the generator to project an input face image into the latent space.

In another embodiment of the present invention, a method of anonymizing a face in a set of images by at least one processor comprises backpropagating through an algorithm with stochastic gradient descent optimization.

In another embodiment of the present invention, a method of anonymizing a face in a set of images by at least one processor comprises providing conditions at each input through manipulating the corresponding latent vector to minimize loss functions.

In another embodiment of the present invention, a method of anonymizing a face in a set of images by at least one processor comprises placing generated face back into the original image by reverse alignment and blending.

In another embodiment of the present invention, a method of anonymizing a face in a set of images by at least one processor comprises manipulating the points on the face and making changes to obtain a landmark loss function.

In another embodiment of the present invention, a method of anonymizing a face in a set of images by at least one processor comprises mapping the target identity features, while preserving the relevant metrics in the input to obtain an identity loss function.

In another embodiment of the present invention, a method of anonymizing a face in a set of images by at least one processor comprises mapping the target identity features, while preserving the relevant metrics in the input to obtain an identity loss function.

In another embodiment of the present invention, a method of anonymizing a face in a set of images by at least one processor comprises reinforcing the change perceptually as well as algorithmically changing identity to obtain a geometric structure loss function.

In another embodiment of the present invention, a method of anonymizing a face in a set of images by at least one processor uses the outputs from layer 4 of VGG16 for optimization.

In another embodiment of the present invention, a method of anonymizing a face in a set of images by at least one processor uses the outputs from layer 4 of VGG16 for optimization.

In another embodiment of the present invention, a method of anonymizing a face in a set of images by at least one processor comprises calculating pixel loss from the fields inside the face segmentation mask, between the input image and the generated image.

In another embodiment of the present invention, a method of anonymizing a face in a set of images by at least one processor comprises calculating SSIM loss from the fields inside the face segmentation mask between the "syntonymized" image ("synthetically anonymized/generated output image") and the generated image.

In another embodiment of the present invention, a method of anonymizing a face in a set of images by at least one processor comprises calculating LPIPS loss from the fields inside the face segmentation mask, between the input image and the generated image.

In another embodiment of the present invention, a method of anonymizing a face in a set of images by at least one processor comprises controlling output through heatmaps of landmarks when faulty landmarks selected.

In another embodiment of the present invention, a method of anonymizing a face in a set of images by at least one processor comprises calculating landmark loss between the input image eye and mouth points and the generated image eye and mouth points.

In another embodiment of the present invention, a method of anonymizing a face in a set of images by at least one processor comprises calculating eye VGG loss from the fields inside the eye segmentation mask, between the input image and the generated image.

In another embodiment of the present invention, a method of anonymizing a face in a set of images by at least one processor comprises calculating L1 penalty loss between the mean latent vector and the latent vector predicted in iteration.

In another embodiment of the present invention, a method of anonymizing a face in a set of images by at least one processor uses the information that the discriminator learns while controlling the outputs of the generator during optimization as a discriminator loss.

In another embodiment of the present invention, a method of anonymizing a face in a set of images by at least one processor comprises calculating background loss to avoid incompatibility while blending the face generated into the input image.

In another embodiment of the present invention, a method of anonymizing a face in a set of images by at least one processor comprises calculating identity loss between the target image identity vector and the generated image identity vector.

In another embodiment of the present invention, a method of anonymizing a face in a set of images by at least one processor comprises calculating additional identity loss between the input image identity vector and the generated image identity vector.

In another embodiment of the present invention, a method of anonymizing a face in a set of images by at least one processor comprises calculating render loss from the fields inside the face render mask, between the target image reconstructed with new head pose and the generated image.

In another embodiment of the present invention, a method of anonymizing a face in a set of images by at least one processor comprises calculating geometric structure loss between the shifted landmark heatmaps and the generated image landmark heatmaps.

In another embodiment of the present invention, a method of anonymizing a face in a set of images by at least one processor comprises calculating 3D loss taking shape information from the target and remaining information from the input of output from 3d face construction for generated face and ground truth.

In another embodiment of the present invention, a method of anonymizing a face in a set of images by at least one processor comprises calculating generating new hair by manipulating the colour and pattern with the hair mask.

In another embodiment of the present invention, a method of anonymizing a face in a set of images by at least one processor comprises creating a mask to determine the places that cover the change in accordance with each output to perform blending on this mask.

In another embodiment of the present invention, a method of anonymizing a face in a set of images by at least one processor processes on real time.

In another embodiment of the present invention, a method of anonymizing a face in a set of images by at least one processor comprises a dataset obtained by said method to model the process in deep neural networks.

## Claims

1. A method of anonymizing faces in a set of images obtainable from video streams, by at least one processor, the method comprising;
pre-processing, wherein at least one face is detected from a set of images, multiple landmarks are obtained, said face is aligned based on said landmarks, and a face segmentation mask is extracted,
determining a set of target identity features from a pre-curatable pool of features from non-existing faces to replace the identity features in the set of images that said at least one face is detected,
generating a synthetic face by mixing said set of target identity features and a set of extracted identity features sourced from the set of images by using respective coefficients,
optimizing relevant metrics while metrics such as gender, age, expression, head pose, eye movement, lighting conditions are preserved with the least loss by a pretrained generator network trained on a high-resolution synthetic face dataset being projected to a latent space, gain inverting said generator network to project an input face image into the latent space by a backpropagation algorithm with stochastic gradient descent optimization supplied with at least multiple objective functions,
manipulating the corresponding latent vector with use of said multiple objective functions, whereby loss functions are minimized, and
iterating optimization step until a sufficient anonymity is achieved for each face detected from a set of images.

2. The method of claim 1, wherein a generated synthetic face is placed on a predetermined template.

3. The method of claim 1, wherein a mask comprising areas other than hair, neck, and beard through a face mask segmentation network is extracted.

4. The method of claim 1, wherein a generated synthetic face is placed back into the image from the set of images said face is detected by reverse alignment and blending.

5. The method of claim 1, wherein the landmarks on the face are manipulated to obtain a landmark loss function.

6. The method of claim 1, wherein the target identity features are mapped, while preserving the relevant metrics in the input based on calculation of an identity loss function.

7. The method of claim 1, wherein the change after the iterations are reinforced perceptually as well as algorithmically obtain a geometric structure loss function.

8. The method of claim 1, wherein outputs from layer 4 of a VGG16 are used for optimization.

9. The method of claim 1, wherein;
a pixel loss is calculated from the area inside the face segmentation mask, between the input image and the generated image, and/or
SSIM loss is calculated from the area inside the face segmentation mask between the input image and the generated image, and/or
a LPIPS loss is calculated from the area inside the face segmentation mask, between the input image and the generated image, and/or
VGG loss is calculated for eyes from the area inside the eye segmentation mask, between the input image and the generated image, and/or
L1 penalty loss is calculated between the mean latent vector and the latent vector predicted in iteration, and/or
a background loss is calculated whereby incompatibility while blending the face generated into the input image is avoided, and/or
an identity loss is calculated between the target identity vector and the generated image identity vector, and/or
an additional identity loss is calculated between the input image identity vector and the generated image identity vector, and/or
a render loss is calculated from the area inside the face render mask, between the target image reconstructed with new head pose and the generated image, and/or
a geometric structure loss is calculated between shifted landmark heatmaps and generated image landmark heatmaps, and/or
a 3D loss is calculated, which receives shape information from the target image and remaining information from the 3D-reconstructed generated face image as ground truth,
as part of the loss function minimization.

10. The method of claim 1, wherein output is controlled through heatmaps of landmarks in case of faulty landmarks being selected.

11. The method of claim 5, wherein a landmark loss is calculated between the input image eye and mouth points and the generated image eye and mouth points.

12. The method of claim 1, wherein information learned by a discriminative network is used for controlling the outputs of the generator during optimization as a discriminator loss.

13. The method of claim 1, wherein a new hair is generated by manipulating the colour and pattern within the hair mask.

14. The method of claim 1, wherein a mask is created to determine the area that cover the change in accordance with each output to perform blending on this mask.

15. A device anonymizing a set of faces detected in a stream of a set of images, wherein,
said device can be a vehicle camera, an image recording end device, a device configured to capture visual streaming data, an edge device;
said device is configured to execute a face anonymization method as set forth in Claims 1-14, whereby faces detected in said set of images received by said device can be anonymized and privacy-compliant lossless visual data is provided.

16. A device of anonymizing a set of faces as set forth in Claim 15 **characterized in that** said device can further be configured to execute said face anonymization method in real-time.

## Patentansprüche

1. Verfahren zum Anonymisieren von Gesichtern in einem aus Videoströmen erhältlichen Satz von Bildern durch mindestens einen Prozessor, wobei das Verfahren umfasst:
eine Vorverarbeitung, wobei mindestens ein Gesicht aus einem Satz von Bildern erkannt wird, mehrere Landmarken erhalten werden, das Gesicht auf der Grundlage der Landmarken ausgerichtet wird und eine Gesichtssegmentierungsmaske extrahiert wird,
Bestimmen eines Satzes von Zielidentitätsmerkmalen aus einem vorab auswählbaren Pool von Merkmalen nicht existierender Gesichter, um die Identitätsmerkmale in dem Satz von Bildern, in dem das mindestens eine Gesicht erkannt wird, zu ersetzen,
Erzeugen eines synthetischen Gesichts durch Mischen des Satzes von Zielidentitätsmerkmalen und eines Satzes extrahierter Identitätsmerkmale, die aus dem Satz von Bildern stammen, unter Verwendung jeweiliger Koeffizienten,
Optimieren relevanter Metriken, während Metriken wie Geschlecht, Alter, Ausdruck, Kopfhaltung, Augenbewegung und Beleuchtungsbedingungen mit möglichst geringem Verlust erhalten bleiben, mittels eines vortrainierten Generatornetzwerks, das anhand eines hochauflösenden synthetischen Gesichtsdatensatzes trainiert wurde, wobei eine Projektion in einen latenten Raum erfolgt, wobei das Generatornetzwerk invertiert wird, um ein Eingabegesichtsbild durch einen Rückpropagierungsalgorithmus mit stochastischer Gradientenabstiegsoptimierung unter Verwendung mindestens mehrerer Zielfunktionen, in den latenten Raum zu projizieren,
Manipulieren des entsprechenden latenten Vektors unter Verwendung der mehreren Zielfunktionen, wodurch Verlustfunktionen minimiert werden, und
Iterieren des Optimierungsschritts, bis für jedes in einem Satz von Bildern erkannte Gesicht eine ausreichende Anonymität erreicht ist.

2. Verfahren nach Anspruch 1, wobei ein erzeugtes synthetisches Gesicht auf einer vorbestimmten Vorlage platziert wird.

3. Verfahren nach Anspruch 1, wobei mittels eines Gesichtsmasken-Segmentierungsnetzwerks eine Maske extrahiert wird, die andere Bereiche als Haare, Hals und Bart umfasst.

4. Verfahren nach Anspruch 1, wobei ein erzeugtes synthetisches Gesicht durch inverse Ausrichtung und Überblendung wieder in das Bild des Satzes von Bildern eingesetzt wird, in dem das Gesicht erkannt wird.

5. Verfahren nach Anspruch 1, wobei die Landmarken auf dem Gesicht manipuliert werden, um eine Landmarken-Verlustfunktion zu erhalten.

6. Verfahren nach Anspruch 1, wobei die Zielidentitätsmerkmale abgebildet werden, während die relevanten Metriken in der Eingabe auf Grundlage der Berechnung einer Identitätsverlustfunktion erhalten bleiben.

7. Verfahren nach Anspruch 1, wobei die Veränderung nach den Iterationen sowohl wahrnehmungsbezogen als auch algorithmisch verstärkt wird, um eine Verlustfunktion für die geometrische Struktur zu erhalten.

8. Verfahren nach Anspruch 1, wobei Ausgaben aus Schicht 4 eines VGG16 zur Optimierung verwendet werden.

9. Verfahren nach Anspruch 1, wobei:
ein Pixelverlust aus dem Bereich innerhalb der Gesichtssegmentierungsmaske zwischen dem Eingabebild und dem erzeugten Bild berechnet wird, und/oder
ein SSIM-Verlust aus dem Bereich innerhalb der Gesichtssegmentierungsmaske zwischen dem Eingabebild und dem erzeugten Bild berechnet wird, und/oder
ein LPIPS-Verlust aus dem Bereich innerhalb der Gesichtssegmentierungsmaske zwischen dem Eingabebild und dem erzeugten Bild berechnet wird, und/oder
ein VGG-Verlust für die Augen aus dem Bereich innerhalb der Augensegmentierungsmaske zwischen dem Eingabebild und dem erzeugten Bild berechnet wird, und/oder
ein L1-Strafverlust zwischen dem mittleren latenten Vektor und dem in einer Iteration vorhergesagten latenten Vektor berechnet wird, und/oder
ein Hintergrundverlust berechnet wird, wodurch eine Inkompatibilität beim Überblenden des erzeugten Gesichts in das Eingabebild vermieden wird, und/oder
ein Identitätsverlust zwischen dem Zielidentitätsvektor und dem Identitätsvektor des erzeugten Bildes berechnet wird, und/oder
ein zusätzlicher Identitätsverlust zwischen dem Identitätsvektor des Eingabebildes und dem Identitätsvektor des erzeugten Bildes berechnet wird, und/oder
ein Rendering-Verlust aus dem Bereich innerhalb der Gesichts-Rendering-Maske zwischen dem mit einer neuen Kopfhaltung rekonstruierten Zielbild und dem erzeugten Bild berechnet wird, und/oder
ein Verlust der geometrischen Struktur zwischen verschobenen Landmarken-Heatmaps und Landmarken-Heatmaps des erzeugten Bildes berechnet wird, und/oder
ein 3D-Verlust berechnet wird, der Forminformationen aus dem Zielbild und verbleibende Informationen aus dem 3D-rekonstruierten erzeugten Gesichtsbild als Ground Truth erhält,
als Teil der Minimierung der Verlustfunktion.

10. Verfahren nach Anspruch 1, wobei die Ausgabe mittels Heatmaps von Landmarken gesteuert wird, falls fehlerhafte Landmarken ausgewählt werden.

11. Verfahren nach Anspruch 5, wobei ein Landmarkenverlust zwischen den Augen- und Mundpunkten des Eingabebildes und den Augen- und Mundpunkten des erzeugten Bildes berechnet wird.

12. Verfahren nach Anspruch 1, wobei von einem Diskriminatornetzwerk gelernte Informationen zum Steuern der Ausgaben des Generators während der Optimierung als Diskriminatorverlust verwendet werden.

13. Verfahren nach Anspruch 1, wobei durch Manipulieren der Farbe und des Musters innerhalb der Haarmaske neue Haare erzeugt werden.

14. Verfahren nach Anspruch 1, wobei eine Maske erstellt wird, um den Bereich zu bestimmen, der die Änderung entsprechend jeder Ausgabe abdeckt, um auf dieser Maske eine Überblendung durchzuführen.

15. Vorrichtung zum Anonymisieren eines Satzes von Gesichtern, die in einem Strom eines Satzes von Bildern erkannt werden, wobei
die Vorrichtung eine Fahrzeugkamera, ein Bildaufzeichnungs-Endgerät, eine zum Erfassen visueller Streaming-Daten konfigurierte Vorrichtung oder eine Edge-Vorrichtung sein kann;
die Vorrichtung dazu konfiguriert ist, ein Verfahren zur Gesichtsanonymisierung nach den Ansprüchen 1 bis 14 auszuführen, wodurch in dem von der Vorrichtung empfangenen Satz von Bildern erkannte Gesichter anonymisiert werden können und datenschutzkonforme verlustfreie visuelle Daten bereitgestellt werden.

16. Vorrichtung zum Anonymisieren eines Satzes von Gesichtern nach Anspruch 15, **dadurch gekennzeichnet, dass** die Vorrichtung ferner dazu konfiguriert sein kann, das Verfahren zur Gesichtsanonymisierung in Echtzeit auszuführen.

## Revendications

1. Procédé d'anonymisation de visages dans un ensemble d'images pouvant être obtenues à partir de flux vidéo, par au moins un processeur, le procédé comprenant :
un prétraitement, dans lequel au moins un visage est détecté dans un ensemble d'images, plusieurs points de repère sont obtenus, ledit visage est aligné sur la base desdits points de repère, et un masque de segmentation de visage est extrait,
la détermination d'un ensemble de caractéristiques d'identité cibles à partir d'un pool préalablement sélectionnable de caractéristiques provenant d'identités inexistantes afin de remplacer les caractéristiques d'identité dans l'ensemble d'images dans lequel ledit au moins un visage est détecté,
la génération d'un visage synthétique en mélangeant ledit ensemble de caractéristiques d'identité cibles et un ensemble de caractéristiques d'identité extraites provenant de l'ensemble d'images à l'aide de coefficients respectifs,
l'optimisation de métriques pertinentes tout en préservant, avec une perte minimale, des métriques telles que le sexe, l'âge, l'expression, la pose de la tête, le mouvement des yeux et les conditions d'éclairage, au moyen d'un réseau générateur pré-entraîné, entraîné sur un ensemble de données de visages synthétiques à haute résolution, par projection dans un espace latent, l'inversion dudit réseau générateur afin de projeter une image de visage d'entrée dans l'espace latent étant réalisée par un algorithme de rétropropagation avec optimisation par descente de gradient stochastique, mettant en œuvre au moins plusieurs fonctions objectives,
la manipulation du vecteur latent correspondant à l'aide desdites plusieurs fonctions objectives, moyennant quoi les fonctions de perte sont minimisées, et
l'itération de l'étape d'optimisation jusqu'à ce qu'un anonymat suffisant soit obtenu pour chaque visage détecté dans un ensemble d'images.

2. Procédé selon la revendication 1, dans lequel un visage synthétique généré est placé sur un modèle prédéterminé.

3. Procédé selon la revendication 1, dans lequel un masque comprenant les zones autres que les cheveux, le cou et la barbe est extrait au moyen d'un réseau de segmentation de masque facial.

4. Procédé selon la revendication 1, dans lequel un visage synthétique généré est replacé dans l'image de l'ensemble d'images dans laquelle ledit visage est détecté, par alignement inverse et fusion.

5. Procédé selon la revendication 1, dans lequel les points de repère sur le visage sont manipulés afin d'obtenir une fonction de perte de points de repère.

6. Procédé selon la revendication 1, dans lequel les caractéristiques d'identité cibles sont mises en correspondance, tout en préservant les métriques pertinentes dans l'entrée sur la base du calcul d'une fonction de perte d'identité.

7. Procédé selon la revendication 1, dans lequel le changement après les itérations est renforcé perceptuellement ainsi qu'algorithmiquement afin d'obtenir une fonction de perte de structure géométrique.

8. Procédé selon la revendication 1, dans lequel des sorties de la couche 4 d'un VGG16 sont utilisées pour l'optimisation.

9. Procédé selon la revendication 1, dans lequel :
une perte de pixels est calculée à partir de la zone située à l'intérieur du masque de segmentation de visage, entre l'image d'entrée et l'image générée, et/ou
une perte SSIM est calculée à partir de la zone située à l'intérieur du masque de segmentation de visage, entre l'image d'entrée et l'image générée, et/ou
une perte LPIPS est calculée à partir de la zone située à l'intérieur du masque de segmentation de visage, entre l'image d'entrée et l'image générée, et/ou
une perte VGG est calculée pour les yeux à partir de la zone située à l'intérieur du masque de segmentation des yeux, entre l'image d'entrée et l'image générée, et/ou
une perte de pénalité L1 est calculée entre le vecteur latent moyen et le vecteur latent prédit lors de l'itération, et/ou
une perte d'arrière-plan est calculée, grâce à laquelle une incompatibilité lors de la fusion du visage généré dans l'image d'entrée est évitée, et/ou
une perte d'identité est calculée entre le vecteur d'identité cible et le vecteur d'identité de l'image générée, et/ou
une perte d'identité supplémentaire est calculée entre le vecteur d'identité de l'image d'entrée et le vecteur d'identité de l'image générée, et/ou
une perte de rendu est calculée à partir de la zone située à l'intérieur du masque de rendu de visage, entre l'image cible reconstruite avec une nouvelle pose de tête et l'image générée, et/ou
une perte de structure géométrique est calculée entre des cartes thermiques de points de repère décalées et des cartes thermiques de points de repère de l'image générée, et/ou
une perte 3D est calculée, laquelle reçoit des informations de forme provenant de l'image cible et des informations restantes provenant de l'image de visage générée reconstruite en 3D en tant que vérité terrain,
dans le cadre de la minimisation de la fonction de perte.

10. Procédé selon la revendication 1, dans lequel la sortie est commandée au moyen de cartes thermiques de points de repère, lorsque des points de repère défaillants sont sélectionnés.

11. Procédé selon la revendication 5, dans lequel une perte de points de repère est calculée entre les points des yeux et de la bouche de l'image d'entrée et les points des yeux et de la bouche de l'image générée.

12. Procédé selon la revendication 1, dans lequel des informations apprises par un réseau discriminant sont utilisées pour commander les sorties du générateur pendant l'optimisation sous la forme d'une perte de discriminateur.

13. Procédé selon la revendication 1, dans lequel de nouveaux cheveux sont générés par manipulation de la couleur et du motif à l'intérieur du masque de cheveux.

14. Procédé selon la revendication 1, dans lequel un masque est créé afin de déterminer la zone couvrant le changement conformément à chaque sortie afin d'effectuer une fusion sur ce masque.

15. Dispositif anonymisant un ensemble de visages détectés dans un flux d'un ensemble d'images, dans lequel
ledit dispositif peut être une caméra de véhicule, un dispositif terminal d'enregistrement d'images, un dispositif configuré pour capturer des données de diffusion visuelle, un dispositif informatique en périphérie ;
ledit dispositif est configuré pour exécuter un procédé d'anonymisation de visage tel que défini dans les revendications 1 à 14, moyennant quoi les visages détectés dans ledit ensemble d'images reçu par ledit dispositif peuvent être anonymisés et des données visuelles sans perte conformes aux exigences de confidentialité sont fournies.

16. Dispositif d'anonymisation d'un ensemble de visages tel que défini dans la revendication 15, **caractérisé en ce que** ledit dispositif peut en outre être configuré pour exécuter ledit procédé d'anonymisation de visage en temps réel.
